# EUROPÄISCHE PATENTSCHRIFT

(11) **EP 0 831 696 B1**
(45) Veröffentlichungstag und Bekanntmachung des Hinweises auf die Patenterteilung: **14.11.2001**
(21) Anmeldenummer: 96920775.2
(22) Anmeldetag: 03.06.1996
(51) Int. Cl.: A01N 35/02, A01N 61/00

(54) **TERPENE ZUR REDUZIERUNG DER PHEROMONWIRKUNG AUF LEPIDOPTEREN**
TERPENES FOR REDUCING THE EFFECT OF PHEROMONE ON LEPIDOPTERA
TERPENES POUR LIMITER L'EFFET DES PHEROMONES SUR DES LEPIDOPTERES

(30) Priorität: 10.06.1995 DE 19520706
(43) Veröffentlichungstag der Anmeldung: 01.04.1998
(73) Patentinhaber: BASF AKTIENGESELLSCHAFT, 67056 Ludwigshafen (DE)
(72) Erfinder: DE KRAMER, Jacobus, Jan, D-76275 Ettlingen (DE); NEUMANN, Ulrich, D-67105 Schifferstadt (DE); KLEIN, Ulrich, D-67117 Limburgerhof (DE); MEIWALD, Mechtild, D-67657 Kaiserslautern (DE); KRIEG, Wolfgang, D-67366 Weingarten (DE)
(86) Internationale Anmeldenummer: EP9602391
(87) Internationale Veröffentlichungsnummer: WO9641527

(56) Entgegenhaltungen:
- WO-A-93/00812
- DE-A- 2 534 765
- DE-A- 3 734 657
- FR-A- 2 678 482
- DATABASE WPI Section Ch, Week 8743 Derwent Publications Ltd., London, GB; Class C03, AN 87-302818 XP002017938 & JP,A,62 212 305 (SHINETSU CHEM IND KK) , 18.September 1987
- DATABASE WPI Section Ch, Week 9526 Derwent Publications Ltd., London, GB; Class C03, AN 95-196675 XP002017939 & JP,A,07 112 907 (ST KAGAKU KK) , 2.Mai 1995

## Beschreibung

Die vorliegende Erfindung betrifft die Verwendung von Terpenen zur Bekämpfung von Lepidopteren nach der Paarungsstörmethode sowie ein Verfahren, die Terpene auf den Lebensraum der Lepidopteren einwirken zu lassen.

Der Einsatz von Pheromonen, insbesondere Mischungen von Komponenten aus Sexual-Pheromonen bei der Bekämpfung von Lepidopteren, die Schadinsekten wie Traubenwickler, Apfelwickler, Fruchtschalenwickler, Pfirsichtriebbohrer, Baumwollkapselwurm, Pfirsichmotte, Glasflügler und Eulenfalter umfassen, gehört zum Stand der Technik.

Sexual-Pheromone sind Sexuallockstoffe, die bei Lepidopteren von paarungsbereiten weiblichen oder männlichen Tieren erzeugt und in die Umgebung abgegeben werden und männliche bzw. weibliche Lepidopteren derselben Art anlocken.

Grundsätzlich gibt es drei verschiedene Möglichkeiten, Sexuallockstoffe im Pflanzenschutz anzuwenden:
- sog. Pheromonfallen, bestückt mit synthetischen Sexuallockstoffködern, werden in potentiellen Befallsgebieten ausgehängt. Der Fallenfang von männlichen Faltern erbringt den Nachweis zum Auftreten dieses Schädlings. Es handelt sich um ein wichtiges Hilfsmittel im integrierten Pflanzenschutz zur Bestimmung des günstigen Termines für eine Bekämpfung mit konventionellen Methoden (Monitortechnik).
- durch Kombination eines Lockstoffes mit insektiziden Wirkstoffen. Es besteht die Möglichkeit, dem Köder oder der Falle Insektizide zuzusetzen oder aber nur in unmittelbarer Umgebung der Falle zu behandeln. Damit kann der größte Teil der aus weiter Entfernung angelockten männlichen Falterbevölkerung abgetötet werden (Abfangtechnik). Die Biotopbelastung ist auf ein vertretbares Maß reduziert.
- durch das Verfahren der Luftraumsättigung mit Sexuallockstoffen oder ähnlich wirkenden Substanzen. Die männlichen Schmetterlinge werden am Auffinden der Weibchen gestört und somit die Paarung der Tiere verhindert. In diesem Fall wird im gesamten Bereich der zu schützenden Pflanzenkultur eine größere Menge des Lockstoffes gleichmäßig im Luftraum verteilt, so daß die Männchen überall die Gegenwart des Lockstoffes empfinden können und ihr normales Orientierungsverhalten gestört ist.

Selbst bei dieser letztgenannten Verfahrensweise der Anwendung von Sexuallockstoffen werden nur verhältnismäßig kleine Mengen der Wirkstoffe, welche oft nur Bruchteile der üblichen Dosen der klassischen Insektizidwirkstoffe entsprechen, benötigt. (Birch(de.): Pheromones North Holland Publ. Co. (1974). Es handelt sich dabei um eine äußerst selektive, untoxische Bekämpfungsmethode unter größtmöglicher Schonung der Nicht-Zielorganismen, insbesondere der Nützlinge. Allerdings sind die natürlichen Sexuallockstoffe, die von den entsprechenden Organen der weiblichen Tiere erzeugt werden, oft synthetisch schwer zugänglich.

Bei einer Methode zur Prognose des Auftretens von Lobesia wird der Lobesia-Sexuallockstoff E7, Z9-Dodecadienyl-l-acetat, als Köder in Fallen ausgebracht, im Weinbau angewendet, wie in der DE-PS 24 40 759 beschrieben ist. Eine gezielte Bekämpfung des Bekreuzten Traubenwicklers in der Praxis mit dem bekannten Sexuallockstoff E7, Z9-Didecadienyl-1-acetat ist seit 1994 möglich.

Labor- und Kleinversuche zur Beeinflussung von Lobesia botrana-Männchen mit der Konfusionstechnik bei Einsatz des originalen Sexuallockstoffes, E7, Z9-Dodecadienyl-1-acetat und mit ähnlichen Stoffen, nämlich Z9-Dodecenyl-1-acetat. E7-Dodecenyl-1-acetat sowie E7, E9-Dodecadienyl-1-acetat wurde mit wechselhaftem Erfolg durchgeführt (ROEHRICH et al, Ann. Zool. Ecol. quim. 1979, S. 659 ff. und die dort angegebenen Fundstellen, GUREVITZ und GOTHILF, Phytoparasitica 10 S. 140 (1982).

Die DE-C 36 03 377 beschreibt ein Gemisch aus Z9-Dodecenyl-1-acetat und E7-Dodecenyl-1-acetat zur Bekämpfung von Lobesia botrana.

Allen beschriebenen Methoden gemeinsam ist, daß stets Pheromone verwendet werden, die die Lepidopteren anlocken.

Einen anderen Weg beschreibt Helmut Snoek in Duftstoffe, S. 36, Eigenverlag 1992, indem mit ätherischen Ölen das Insektenweibchen verwirrt wird, so daß es die zur Eiablage notwendige Testpflanze nicht findet. Auf S. 39 kommt Helmut Snoek jedoch zu dem Schluß, daß großflächige Monokulturen durch Aromaprodukte nicht wirkungsvoll zu schützen sind.

Aufgabe der vorliegenden Erfindung war es, weitere Verfahren zur Verfügung zu stellen, um Lepidopteren wirkungsvoll zu bekämpfen. Überraschenderweise wurde gefunden, daß man unter Verwendung von Terpenen die Pheromonwirkung auf Lepidopteren reduzieren kann.

Für die vorliegende Erfindung geeignete Terpene sind acyclische, monocyclische, bicyclische Terpene, Sesquiterpene, Diterpene sowie deren Gemische einschließlich deren E- und Z-Isomeren bzw. deren optische Antipoden.

Geeignete acyclische Terpene umfassen Terpenkohlenwasserstoffe wie Ocimen, Myrcen, Terpenalkohole wie Geraniol, Nerol, Linalool, Citronellol, Nerolidol, Prenol (Dimethylallylalkohol), Tetra-hydrolinalool, Geranylgeraniol, 2,6-Dimethylheptan-2-ol, Terpen-aldehyde wie Citral, Neral, Citronellal, Tetrahydrocitronellal (2,5,7,7-Tetramethyloctanol), Terpenketone wie α-Jonon, β-Jonon, Geranylaceton, Phytol, Isophytol, Retinal und deren Gemische.

Geeignete monocyclische Terpene umfassen monocyclische Terpenkohlenwasserstoffe wie α-Terpinen, γ-Terpinen, Terpinolen, α-Phellandren, β-Phellandren, Limonen, Dipenten, monocyclische Terpenalkohole wie Menthol, α-Terpineol, 1.8-Terpin, monocyclische Terpenketone wie Menthon, Pulegon, Carvon und deren Gemische.

Geeignete bicyclische Terpene umfassen die Carangruppe mit Caran, Caron, Carvenon, die Pinangruppe mit Pinan, α-Pinen und β-Pinen die Bornangruppe mit Bornan, Campher sowie deren Gemische.

Geeignete Sesquiterpene umfassen die acyclischen Sesquiterpene wie Farnesol, Nerolidol, monocyclische Sequiterpene wie Bisabolen, bicyclische Sesquiterpene wie Cadinen, β-Selinen, tricyclische Sesquiterpene wie α-Santalen sowie deren Gemische.

Geeignete Diterpene umfassen Phytol, Isophytol, Retinal und deren Gemische.

Bevorzugt werden Citral, Nerolidol, Prenol (Dimethylallyl-alkohol), Tetrahydrolinalool, Geranylgeraniol, 2,6-Dimethyl-heptan-2-ol, Neral, Citronellal, Tetrahydrocitronellal (2,5,7,7-Tetramethyloctanol), Geranylaceton, Phytol, Isophytol, Retinal und deren Gemische verwendet.

Besonders bevorzugt werden Citral, Nerolidol, Prenol (Dimethyl-allylalkohol), Tetrahydrolinalool, Geranylgeraniol, 2,6-Dimethyl-heptan-2-ol, Neral, Citronellal, Tetrahydrocitronellal (2,5,7,7-Tetramethyloctanol), Geranylaceton und deren Gemische verwendet.

Weiterhin bevorzugt werden Citral, Neral, Citronellal, Tetrahydrocitronellal (2,5,7,7-Tetramethyloctanol), Geranylaceton und deren Gemische verwendet.

Als ganz besonders wirksam im Rahmen der vorliegenden Erfindung hat sich Citral erwiesen.

Zur erfindungsgemäßen Formulierung der Terpene kommen sowohl flüssige wie auch feste Präparationen in Frage. Als Lösungsmittel kommen hochsiedende, aromatische, aliphatische oder cycloaliphatische Verbindungen in Betracht. Neben Kohlenwasserstoffen eignen sich Ester, Ether, Siliconöle oder Ketone besonders gut. Typische Vertreter dieser Klassen sind z.B.: Xylol, Methyl-naphthaline. Paraffinöle, Cyclohexanon, Ethylglykolacetat, Isophoron und Dibutylphthalat. Diese Lösungsmittel können allein oder in Mischungen mit anderen Komponenten Verwendung finden. Weiterhin können Lösungen in pflanzlichen, tierischen oder synthetischen Ölen oder Fetten und anderen verdunstungshemmenden Lösungsmitteln mit niedrigem Dampfdruck wie z.B. höhere C₁₀-C₂₀-Alkylacetate oder geradkettige oder verzweigte C₁-C₈-Dialkylphthalate zum Zwecke der Wirkungsverlängerung hergestellt werden.

Weiterhin können die Terpene auch im Gemisch mit Pheromonen und verwandten Duftstoffen angewendet werden. Geeignete Pheromone sind beispielsweise in Heinrich Arn, List Of Sex Pheromones Of Lepidoptera And Related Attractants, Organisation Internationale de Lutte Biologique Section Régionale Ouest Palearctique, 1986, beschrieben.

Beispiele für geeignete Pheromone sind 29-Dodecenyl-1-acetat, Z8-Dodecenyl-1-acetat, E7-Dodecenyl-1-acetat, E5-Decenyl-1-acetat, E5-Decen-1-ol, E7,Z9-Dodecadienyl-1-acetat, Z11-Tetradecenyl-1-acetat, Z9-Tetradecenyl-l-acetat, Z8-Tetradecenyl-1-acetat, E8,E10-Dodecadien-1-ol, Z3,Z13-Octadecadienyl-1-acetat und E2, Z13-Octadecadienyl-l-acetat.

Werden Pheromone und verwandte Stoffe mitverwendet, sind E7,Z9-Dodecadienyl-1-acetat, Z9-Dodecenyl-1-acetat, E7-Dodecenyl-1-acetat und deren Gemische bevorzugt.

Werden Pheromone und verwandte Stoffe mitverwendet, haben sich Mischungsverhältnisse Terpen : Pheromon von 100:1 bis 1:100, bevorzugt 100:2 bis 1:50 und besonders bevorzugt 100:5 bis 1:10, ganz besonders bevorzugt 100:10 bis 1:1 bewährt.

Zur Ausbringung der Terpene werden Dispenser verwendet, die den Wirkstoff über einen langen Zeitraum mit einer konstanten Abgaberate freisetzt. Viele solcher Systeme sind in der Literatur bereits beschrieben und lassen sich in zwei Kategorien einordnen:
1. Matrixsysteme
2. Reservoirsysteme

In Matrixsystemen ist der Wirkstoff in einer Matrix homogen verteilt. Die Abgaberate ist, bedingt durch diesen Aufbau, nicht linear, sondern nimmt mit der Zeit ab. Bei den Reservoirsystemen befindet sich der Wirkstoff in einem Reservoir und wird über Diffusion durch eine Wand mit konstanter Dicke abgegeben. Reservoirsysteme weisen deshalb im Gegensatz zu den Matrixsystemen eine konstantere Abgaberate auf und sind in der Abgabe-charakteristik und oft auch in der Abgabedauer überlegen.

Bei den Matrixsystemen werden die Terpene in oder an natürliche oder synthetische feste Träger wie Gummi, Kork, Zellulose, Kunststoffe, gemahlene Kohle, Holzmehl, Silikate, Bimskies, gebrannten Ton oder ähnliche feste Trägerstoffe gebunden. Reservoirsysteme umfassen spezielle Kapselformulierungen, Kunststoffbehälter, Kapillaren oder anderen Gefäße, wobei der Wirkstoff durch Folien oder enge Öffnungen zur Verdunstung gebracht wird, wodurch über längere Zeiträume hinweg besonders gleichmäßige Duftkonzentrationen erzielt werden. Mehrschichtige Plättchen aus Kunststoff oder Cellulose, sogenannten Flakes, sind ebenfalls geeignet.

Geeignete Kunststoffbehälter werden in der DE-A 36 40 880 und der EP-A 496 102 und der EP-A 540 932 beschrieben.

Der Gehalt an Terpenen in Formulierungen kann innerhalb weiter Grenzen schwanken. Generell kann das Verhältnis Terpen : Zusatzstoff z.B. im Bereich von z.B. 10:1 bis 1:10³ liegen. In Kapselformulierungen oder anderen geeigneten Behältern kann z.B. das Terpen in reiner, unverdünnter Form angewendet werden und sein Gewichtsanteil, bezogen auf die Gesamtformulierung, sehr hoch sein und bis zu 90 % betragen. Im allgemeinen genügen jedoch sehr geringe Wirkstoffkonzentrationen in den Formulierungen, um die gewünschte Wirkung auf Lepidopteren auszuüben. Bevorzugt ist ein Mengenverhältnis Terpen : Zusatzstoff von 1:3 bis 1:10².

Man kann die Terpene auch in vergleichsweise hohen Konzentrationen ausbringen. Für diese Methode eignen sich am besten Formulierungen mit schwerflüchtigen Zusatzstoffen, die die Terpene protrahiert abgeben, wie Gummi, Zellstoff, Wachse, Polymerisate oder verdunstungshemmende, schwerflüchtige öle oder Paraffine, sowie Formulierungen in Kapseln oder anderen Behältern (Kapillaren), die die Terpene entweder durch ihre Wandung oder durch enge Öffnungen abgeben. Die Terpenkonzentration liegt hier im allgemeinen im Bereich von 1:1 bis 1:10³.

### Beispiel 1

Labor-Windkanal:

In einem Labor-Windkanal wurden 4 bis 2 cm³ große Elektrofallen installiert. Als Elektrofallen wurden handelsübliche elektrische Insekten-Fanggeräte zu registrierenden Köderfallen umgebaut. Die normalerweise für die Lockwirkung verantwortliche Leuchtstoffröhre wurde durch eine Duftquelle ersetzt.

Zur Vermeidung von Positionseffekten wurden die vier Fallen auf einer Felge befestigt. Die Felge wurde durch einen Motor mit einer Geschwindigkeit von zwei Umdrehungen pro Stunde (einmal um die eigne Achse und zurück) gedreht, so daß die Fallen ständig die Position wechselten.

Bei gleicher Beköderung war eine Bevorzugung bestimmter Fallen nicht festzustellen: Windabwärts wurden zwischen 50 und 500 (je nach gerade verfügbarer Menge, in der Regel 200 bis 300) Lobesia-Männchen im Alter von ein bis drei Tagen freigelassen, diese flogen die in den Fallen enthaltenen Duftstoffquellen gezielt an.

Täglich wurde die Zahl der gefangenen Falter in jeder Falle festgestellt. Anhand der Anzahl gefangener Falter in den einzelnen Fallen wurde die Attraktiviät des jeweiligen Köders ermittelt. (Präferenz-Test).

Der Einfluß unterschiedlicher Verdünnungen von E7, Z9-Dodecadien-1-yl-acetat wurde ermittelt, indem die Anzahl der Falter in der gängigsten Falle gleich eins gesetzt, die Fängigkeit der anderen Fallen relativ dazu berechnet wurde.

Als Duftquellen dienten Kartuschen (Einmal-Spritzen aus Polypropylen; Inhalt: 1 ml). Filterpapier von 4 mm x 60 mm Kantenlänge wurden mit 30 µl der jeweiligen Versuchs-Substanz getränkt und in die Spritzen gelegt, die daraufhin mit einer Injektions-Kanüle (0,9 mm Außendurchmesser) verschlossen wurden.

Durch diese Kartuschen wurde ein Luftstrom von 67 ml/min geleitet.

Zur Untersuchung der Wirkung von Terpenen wurde die Rückfangrate der Kartuschen, die mit 30 µl E7,Z9-Dodecadien-1-yl-acetat in der Konzentration 10⁻⁴ g/g Siliconöl als Standard bzw. mit der gleichen Menge Standard und Citral in 10⁻¹ g/g Siliconöl beködert waren, verglichen.

Die Rückfangrate ist das Verhältnis der Anzahl gefangener Lobesia-Männchen und der Anzahl freigelassener Lobesia-Männchen.

Die Rückfangrate des Standards wurde gleich eins gesetzt und die der Fallen mit dem Terpenzusatz relativ dazu berechnet.

Für die Fallen mit dem Citralzusatz ergab sich eine Hemmung der Rückfangrate an den citralhaltigen Kartuschen von 90 %.

### Beispiel 2

Freiland Windkanäle;

In einem Versuchsfeld der SLFA Neustadt wurden im Frühjahr 1994 zwei Freiland-Windkanäle über jeweils einer Rebzeile aufgebaut. Hierbei handelte es sich um 2 m hohe, 2 m breite und 10 m lange Aluminium-Baugerüste.

Vorder- und Hinterseite wurden mit Moskitonetzen aus Baumwolle (Maschenweite 1,5 x 1,5 mm) bespannt; über der gesamten Länge lag 50 µ dicke Polyethylen-Folie.

Durch einen Ventilator am Vorderende des Kanals wurde Luft in den Innenraum geblasen.

An der Ventilatorseite wurden im Innern der beiden Windkanäle in etwa 60 cm Höhe je zwei Fallen angebracht. Die Fallen waren mit E7, Z9-Dodecadien-1-yl-acetat beködert. Kanal 1 blieb unbehandelt und diente als Kontrolle. Zur Simulation einer Paarungsstörungs-situation wurde in Kanal 2 entlang der Reihe von Weinreben 10 Filterpapiere in unterschiedlicher Höhe (20 - 120 cm) gleichmäßig verteilt. Auf diese wurde jeweils 1 ml Citral-Lösung in Siliconöl mit der Verdünnungsstufe 10⁻¹ g/g getropft, um eine gleichmäßige Konzentration des Stoffes im Innenraum zu erreichen. An der den Ventilatorseiten gegenüberliegenden Seiten der beiden Windkanäle wurde jeweils eine bestimmte Anzahl Lobesia-Männchen freigelassen. Nach Versuchsende wurden die in den Fallen gefangenen Lobesia-Männchen ausgezählt und die Rückfangrate bestimmt.

| | Rückfangrate |
|---|---|
| Kanal 1 (Kontrolle) | 0,18 |
| Kanal 2 (Behandlung mit Citral) | 0,01 |

Das bedeutet eine Hemmung der Rückfangrate um 94,5 %.

## Patentansprüche

1. Verwendung eines Terpens zur Bekämpfung von Lepidopteren nach der Paarungsstörmethode.

2. Verwendung eines Terpens nach Anspruch 1, ausgewählt aus der Gruppe der acyclischen, monocyclischen, bicyclischen Terpene, Sesquiterpene, Diterpene und deren Gemische.

3. Verwendung eines Terpens nach Anspruch 1 oder 2, ausgewählt aus der Gruppe der acyclischen Terpenkohlenwasserstoffe, Terpenalkohole, Terpenaldehyde, Terpenketone und deren Gemische.

4. Verwendung eines Terpens nach einem der Ansprüche 1 bis 3, ausgewählt aus der Gruppe der monocyclischen Terpenkohlenwasserstoffe, Terpenalkohole, Terpenketone und deren Gemische.

5. Verwendung eines Terpens nach einem der Ansprüche 1 bis 4, ausgewählt aus der Carangruppe, Pinangruppe, Bornangruppe und deren Gemische.

6. Verwendung eines Terpens nach einem der Ansprüche 1 bis 5, ausgewählt aus der Gruppe Ocimen, Myrcen, Geraniol, Nerol, Linalool, Citronellol, Citral, α-Jonon, β-Jonon, p-Menthan, Limonen, Dipenten, Menthol, α-Terpineol, Menthon, Pulegon, Carron, Caran, Pinan, Bornan, Caron, Verbenon, Campher, Caron, Carvenon, α-Pinen, β-Pinen, α-Terpineol, 1,8-Terpin, Fornesol, Nerolidol, Bisabolen, Cadinen, β-Selinen, Nerolidol, Prenol (Dimethylallylalkohol), Tetrahydrolinalool, Geranylgeraniol, 2,6-Dimethylheptan-2-ol, Neral, Citronellal, Tetrahydrocitronellal (2,5,7,7-Tetramethyloctanol), Geranylaceton, Phytol, Isophytol, Retinal und deren Gemische.

7. Verwendung eines Terpens nach Anspruch 6, **dadurch gekennzeichnet, daß** man Citral verwendet.

8. Verfahren zur Störung der Paarung von Lepidopteren, **dadurch gekennzeichnet, daß** man ein Terpen gemäß einem der Ansprüche 1 bis 7 auf den Lebensraum der Lepidopteren einwirken läßt.

9. Verfahren nach Anspruch 8, **dadurch gekennzeichnet, daß** man ein Gemisch aus einem Terpen und einem Zusatzstoff verwendet, ausgewählt aus der Gruppe der organischen Lösungsmittel, pflanzlichen Öle, tierischen Öle, synthetischen Öle und deren Gemische.

10. Verfahren nach Anspruch 8 oder 9, **dadurch gekennzeichnet, daß** man ein Gemisch aus einem Terpen und einem Pheromon verwendet.

11. Verfahren nach Anspruch 11, **dadurch gekennzeichnet, daß** man als Pheromon E7, Z9-Dodecadienyl-1-acetat, Z9-Dodecenyl-1-acetat, E7-Dodecenyl-1-acetat, E7,Z9 Dodecanyl-1-ol, Z9-Dodecanyl-1-ol, E7,Z9 Dodecanyl-1-al, Z9 Dodecanyl-1-al und deren Gemische verwendet.

## Claims

1. The use of a terpene for combating Lepidoptera using the mating disruption method.

2. The use of a terpene as claimed in claim 1, selected from the group consisting of acyclic, monocyclic and bicyclic terpenes, sesquiterpenes, diterpenes and mixtures thereof.

3. The use of a terpene as claimed in claim 1 or 2, selected from the group consisting of acyclic terpene hydrocarbons, terpene alcohols, terpene aldehydes, terpene ketones and mixtures thereof.

4. The use of a terpene as claimed in one of claims 1 to 3, selected from the group consisting of monocyclic terpene hydrocarbons, terpene alcohols, terpene ketones and mixtures thereof.

5. The use of a terpene as claimed in one of claims 1 to 4, selected from the carane group, pinane group, bornane group and mixtures thereof.

6. The use of a terpene as claimed in one of claims 1 to 5, selected from the group consisting of ocimene, myrcene, geraniol, nerol, linalool, citronellol, citral, α-ionone, β-ionone, p-menthane, limonene, dipentene, menthol, α-terpineol, menthone, pulegone, carvone, carane, pinane, bornane, carone, verbenone, camphor, carvenone, α-pinene, β-pinene, α-terpineol, 1,8-terpine, farnesol, nerolidol, bisabolene, cadinene, β-selinene, nerolidol, prenol (dimethylallyl alcohol), tetrahydrolinalool, geranylgeraniol, 2,6-dimethylheptan-2-ol, neral, citronellal, tetrahydrocitronellal (2,5,7,7-tetramethyloctanol), geranylacetone, phytol, isophytol, retinal and mixtures thereof.

7. The use of a terpene as claimed in claim 6, wherein citral is used.

8. A method of disrupting the mating of Lepidoptera, which comprises allowing a terpene as claimed in one of claims 1 to 7 to act on the habitat of the Lepidoptera.

9. A method as claimed in claim 8, wherein a mixture of a terpene and an additive is used, selected from the group consisting of the organic solvents, vegetable oils, animal oils, synthetic oils and mixtures thereof.

10. A method as claimed in claim 8 or 9, wherein a mixture of a terpene and a pheromone is used.

11. A method as claimed in claim 10, wherein the pheromone used is E7,Z9-dodecadienyl-1-acetate, Z9-dodecenyl-1-acetate, E7-dodecenyl-1-acetate, E7, Z9-dodecanyl-1-ol, Z9-dodecanyl-1-ol, E7,Z9-dodecanyl-1-al, Z9-dodecanyl-1-al and mixtures thereof.

## Revendications

1. Utilisation d'un terpène pour la lutte contre les lépidoptères selon le principe de perturbation de l'accouplement.

2. Utilisation d'un terpène selon la revendication 1, choisi dans le groupe des terpènes acycliques, des terpènes monocycliques, des terpènes bicycliques, des sesquiterpènes, des diterpènes et leurs mélanges.

3. Utilisation d'un terpène selon l'une des revendications 1 ou 2, choisi dans le groupe des hydrocarbures terpéniques acycliques, des alcools terpéniques, des aldéhydes terpéniques, des cétones terpéniques et leurs mélanges.

4. Utilisation d'un terpène selon l'une des revendications 1 à 3, choisi dans le groupes des hydrocarbures terpéniques monocycliques, des alcools terpéniques, des cétones terpéniques et leurs mélanges.

5. Utilisation d'un terpène selon l'une des revendications 1 à 4, choisi dans le groupe du carane, du pinane, du bornane et leurs mélanges.

6. Utilisation d'un terpène selon l'une des revendications 1 à 5, choisi dans le groupe consistant en l'ocimène, le myrcène, le géraniol, le nérol, le linalol, le citronellol, le citral, l'alpha-ionone, la bêtaionone, le p-menthane, le limonène, le dipentène, le menthol, l'alphaterpénéol, la menthone, la pulégone, la carrone, la carane, le pinane, le bornane, la carone, la verbénone, le camphre, le carone, la carvénone, l'alpha-pinène, la bêta-pinène, l'alpha-terpinéol, la 1,8-terpine, le fornésol, le nérolidol, le bisabolène, le cadinène, le bêta-sélinène, le nérolidol, le prénol, (alcool diméthylallylique), le tétrahydrolinalol, le géranylgéraniol, le 2,6-diméthylheptan-2-ol, le néral, le citronellal, le tétrahydrocitronellal (2,5,7,7-tétraméthyloctanol), la géranylacétone, le phytol, l'isophytol, le rétinal et leurs mélanges.

7. Utilisation d'un terpène selon la revendication 6, **caractérisé par le fait que** l'on utilise le citral.

8. Procédé pour perturber l'accouplement des lépidoptères, **caractérisé par le fait que** l'on fait agir un terpène selon l'une des revendications 1 à 7 sur l'habitat des lépidoptères.

9. Procédé selon la revendication 8, **caractérisé par le fait que** l'on utilise un mélange d'un terpène et d'un additif choisi dans le groupe des solvants organiques, des huiles végétales, des huiles animales, des huiles de synthèse et leurs mélanges.

10. Procédé selon l'une des revendications 8 ou 9, **caractérisé par le fait que** l'on utilise un mélange d'un terpène et d'une phéromone.

11. Procédé selon la revendication 11, **caractérisé par le fait que** l'on utilise en tant que phéromone le 1-acétate de E7, Z9-dodécadiényle, le 1-acétate de Z9-dodécényle, le 1-acétate de E7-dodécényle, le E7,Z9-dodécanyl-1-ol, le Z9-dodécanyl-1-ol, l'E7,Z9-dodécanyl-1-al, le Z9-dodécanyl-1-al et leurs mélanges.
